# FASCICULE DE BREVET EUROPEEN

(11) **EP 1 401 146 B1**
(45) Date de publication et mention de la délivrance du brevet: **21.12.2005**
(21) Numéro de dépôt: 03292204.9
(22) Date de dépôt: 09.09.2003
(51) Int. Cl.: H04L 12/24

(54) **Dispositif et procédé de planification de configuration d'un réseau de communications par prévision d'évolution**
Vorrichtung und Verfahren zur Planung der Konfiguration eines Telekommunikationsnetzwerkes mittels Vorhersage des Wandels
Device and method for a telecommunication network configuration planning by evolution forecasting

(30) Priorité: 23.09.2002 FR 0211723
(43) Date de publication de la demande: 24.03.2004
(73) Titulaire: ALCATEL, 75008 Paris (FR)
(72) Inventeur: Betge-Brezetz, Stéphane, 75015 Paris (FR); Martinot, Olivier, 91210 Draveil (FR); Marilly, Emmanuel, 92160 Antony (FR); Delegue, Gérard, 94230 Cachan (FR)
(74) Mandataire: Chaffraix, Sylvain

(56) Documents cités:
- EP-A- 0 883 075
- US-A1- 2002 049 687

## Description

L'invention concerne le domaine des réseaux de communications, et plus particulièrement celui de la planification de la configuration de ces réseaux.

En raison de l'intégration permanente de nouveaux services au sein des réseaux et de l'évolution permanente des équipements qui les constituent, la complexité des réseaux ne cesse de croître, de sorte qu'il devient de plus en plus difficile d'anticiper leur évolution en matière de services et de trafic. De plus, en raison d'accords de niveau de service (ou SLAs pour « Service Level Agreements ») que les opérateurs des réseaux prennent vis-à-vis de leurs clients, l'anticipation de l'évolution du réseau revêt de plus en plus d'importance.

On entend ici par « anticipation d'évolution » (ou planification), le fait de déterminer quand et où l'on devra intégrer un nouvel équipement (par exemple un routeur ou une nouvelle carte), ou accroître la capacité d'une liaison en matière de trafic, par exemple.

La précision de l'anticipation est d'autant plus importante qu'une anticipation trop précoce constitue une approche de type « sur-dimensionnement » ayant une forte probabilité d'être plus coûteuse qu'une anticipation à point nommé, tandis qu'une anticipation trop tardive risque de violer des SLAs et par conséquent de provoquer le mécontentement des clients, éventuellement accompagné de dédommagements, voire même la perte de clients.

Afin de permettre cette anticipation d'évolution, deux solutions ont été proposées. La première solution consiste à définir des seuils d'utilisation de bande passante de liaisons et/ou des seuils d'indication de congestion de routeurs, de sorte qu'en cas de franchissement desdits seuils le gestionnaire du réseau soit averti qu'il doit faire évoluer son réseau. La seconde solution consiste à effectuer des études de marché pour estimer l'évolution des besoins calcul 4 chargé d'élaborer des propositions de planification d'évolution du réseau à partir de l'état prédictif d'utilisation, fourni par le premier module de calcul 3, et de secondes données représentatives des équipements du réseau. Préférentiellement, ces secondes données définissent la topologie du réseau et les caractéristiques des équipements qui le composent, ou en d'autres termes le détail des différentes ressources offertes par le réseau.

Par ailleurs, le dispositif de traitement 1 comprend préférentiellement une interface graphique utilisateur 5, de type GUI (pour « Graphical User Interface »), permettant, d'une part, d'afficher sur un écran, par exemple celui du serveur de gestion 2, les propositions de planification élaborées par le second module de calcul 4, ainsi qu'éventuellement l'état prédictif déterminé par le premier module de calcul 3 et d'autre part, au gestionnaire du réseau de contrôler le fonctionnement du dispositif de traitement 1.

Dans un mode de réalisation préféré, le premier module de calcul 3 comporte tout d'abord un module d'extraction 6 capable d'élaborer des profils d'utilisation des SLAs 7 à partir des premières données, fournies, notamment, par les routeurs de coeur Ri du réseau, et des SLAs passés entre l'opérateur du réseau et ses clients. Préférentiellement, le module d'extraction 6 élabore un profil d'utilisation pour chaque SLA. Par ailleurs, les premières données représentant l'historique des mesures des performances du réseau, le module d'extraction 6 élabore préférentiellement ses profils d'utilisation de SLA 7 par extrapolation, à l'aide d'une technique d'analyse d'évolution de tendance. Le module d'extraction 6 délivre également des alarmes prédictives ou non, lorsqu'un événement se produit ou lorsqu'il risque de se produire, à partir de l'analyse des mesures et des historiques de ces mesures.

Une fois que le module d'extraction 6 a élaboré ses profils d'utilisation des SLAs 7, il les communique à un module d'agrégation 8 du premier module de calcul 3. Celui-ci est chargé de déterminer l'état prédictif d'utilisation du réseau à partir, notamment, des profils d'utilisation des SLAs 7, ainsi que préférentiellement de troisièmes données représentatives d'informations de prévision de besoins d'utilisateurs.

Ces troisièmes données sont par exemple les futurs types de SLAs, susceptibles d'être passés entre l'opérateur du réseau et ses clients actuels besoins des clients et en déduire l'évolution qui doit être apportée au réseau.

Ces solutions reposant sur la prise en compte d'un petit nombre de paramètres, elles ne fournissent pas une évaluation de l'évolution du réseau suffisamment précise. Dans le cas de la première solution, on obtient des informations sur l'origine et la localisation du futur problème, mais on ne dispose pas d'information sur la façon dont ledit problème va évoluer, de sorte que l'on ne peut pas estimer l'importance de l'évolution qui doit être apportée au réseau. Par exemple, lorsque le seuil de bande passante d'une liaison est atteint, on a tendance à augmenter systématiquement d'un pourcentage fixe la capacité de la liaison, quels que soient les besoins réels. Dans le cas de la seconde solution, on connaît la tendance générale de l'évolution d'utilisation des services, mais on ne sait pas ce que l'évolution risque de perturber au niveau du réseau, et encore moins le(s) lieu(x) de la future perturbation.

En outre, la plupart des solutions connues proposent une planification du réseau en fonction de l'évolution de paramètres du réseau, mais sans tenir compte de l'utilisation des services et/ou de l'évolution des souscriptions.

La demande de brevet US 2002/0049687 divulgue un système et une méthode pour prévoir les performances d'un système de type « e-business ». Toutefois, un tel système partage l'inconvénient précédent de ne pas tenir compte de l'évolution des souscriptions,

La demande de brevet EP 0883075 divulgue une méthode de prévisions de valeurs futures à partir d'une série temporelle. Elle n'enseigne pas de tenir compte de l'évolutions de souscriptions.

L'invention a donc pour but de remédier à tout ou partie des inconvénients précités.

Elle propose à cet effet un dispositif de traitement de données de configuration d'un réseau de communications, comportant des premiers moyens de calcul capables de déterminer un état prédictif d'utilisation du réseau à partir de premières données représentatives de l'utilisation des ressources et/ou des services au sein de ce réseau et d 'accords de niveau de service, dits « SLAs », passés entre l'opérateur du réseau et des clients, et des seconds moyens de calcul capables de déterminer une proposition de planification d'évolution du réseau à partir de l'état prédictif d'utilisation et de secondes données représentatives des équipements du réseau.

On entend ici par « premières données », des données de performance du réseau telles que, par exemple, les données actuelles et anciennes d'utilisation de ses ressources et/ou de ses services. Par ailleurs, on entend ici par « proposition de planification » une proposition de modification (ou évolution) du réseau précisant notamment des actions à entreprendre sur certains équipements du réseau et des dates d'intervention.

Selon une autre caractéristique de l'invention, les premiers moyens calcul sont préférentiellement agencés de manière à déterminer l'état prédictif d'utilisation du réseau à partir de troisièmes données, complémentaires des premières données et représentatives d'informations de prévision de besoins d'utilisateurs, comme par exemple les futurs types de SLA, susceptibles d'être passés entre l'opérateur du réseau et ses clients actuels et/ou futurs, et l'évolution prévue des souscriptions de service.

De la sorte, le dispositif peut déterminer sa proposition de planification non seulement à partir des informations (ou paramètres) accessibles dans le réseau, mais également à partir des prévisions des besoins des clients en matière de ressources et/ou de services, obtenues à l'aide d'études de marché, par exemple.

Avantageusement, les premiers moyens de calcul déterminent des profils d'utilisation des SLAs à partir des premières données et des SLAs (de préférence un profil pour chaque SLA), par exemple à l'aide d'une technique d'analyse d'évolution de tendance. Dans ce cas, il est préférable que les premiers moyens de calcul déterminent un profil prédictif d'utilisation de SLA, constituant l'état prédictif d'utilisation du réseau, à partir des profils d'utilisation des SLAs et des troisièmes données (lorsqu'elles sont disponibles).

Par ailleurs, il est particulièrement avantageux que les seconds moyens de calcul comportent, d'une part, des moyens d'ingénierie de trafic capables de déterminer une configuration optimale du réseau à partir des secondes données décrivant les équipements du réseau et d'un état prédictif d'utilisation, et d'autre part, des moyens de validation d'état prédictif alimentant les moyens d'ingénierie de trafic avec l'état prédictif délivré par les premiers moyens de calcul, et capables, à réception d'une configuration optimale, associée à l'état prédictif, de déterminer si le réseau peut supporter, ou non, cette configuration optimale, puis, dans la négative, de déterminer les équipements du réseau susceptibles d'être perturbés par l'évolution du réseau qui correspond à l'état prédictif. Dans ce cas, les seconds moyens de calcul peuvent également comprendre des moyens de détermination de planification couplés à une base de données de planification (par exemple agencées sous forme de règles), et agencés de manière à déterminer la proposition de planification à partir de la désignation des équipements perturbés et des données de planification de la base.

En présence de tels moyens de détermination de planification, on peut envisager d'effectuer une ou plusieurs boucles de validation des propositions de planification. Pour ce faire, on alimente les moyens d'ingénierie de trafic avec la proposition de planification de sorte qu'ils déterminent une nouvelle configuration optimale correspondant à cette proposition définissant un « nouveau » réseau. Puis, on vérifie avec les moyens de validation si le nouveau réseau, défini par la proposition de planification, peut supporter, ou non, la nouvelle configuration optimale, de sorte que dans l'affirmative ils adressent aux moyens de détermination de planification une autorisation de délivrer la proposition de planification qu'ils ont préalablement déterminée, et dans la négative ils déterminent les équipements du réseau susceptibles d'être perturbés par cette proposition de planification afin que les moyens de détermination de planification puissent déterminer une nouvelle proposition de planification qui fera éventuellement l'objet d'une nouvelle validation.

Par ailleurs, le dispositif de traitement peut également comprendre une interface graphique agencée de manière à permettre, d'une part, à un opérateur de définir les troisièmes données et/ou de contrôler la validation des propositions de planification, et d'autre part, d'afficher chaque proposition de planification et/ou chaque état prédictif d'utilisation.

L'invention concerne également un dispositif de gestion d'un réseau de communications, comme par exemple un serveur de type NMS (pour « Network Management System »), équipé d'un dispositif de traitement du type de celui présenté ci-avant.

L'invention porte également sur un procédé de traitement de données de configuration d'un réseau de communications, consistant à déterminer, d'une part, un état prédictif d'utilisation du réseau à partir de premières données représentatives de l'utilisation des ressources et/ou des services au sein du réseau et d'accords de niveau de service , dits «SLA», passés entre l'opérateur du réseau et des clients, et d'autre part, une proposition de planification d'évolution du réseau à partir de l'état prédictif d'utilisation et de secondes données représentatives des équipements de ce réseau.

Le procédé selon l'invention pourra comporter de nombreuses caractéristiques complémentaires qui pourront être prises séparément et/ou en combinaison, et en particulier :
- on peut déterminer l'état prédictif d'utilisation du réseau à partir de troisièmes données, complémentaires des premières données et représentatives d'informations de prévision de besoins d'utilisateurs,
- on peut déterminer, à partir des premières données et de SLAs, des profils d'utilisation de ces SLAs, et de préférence un profil pour chaque SLA,
- on peut déterminer un profil prédictif d'utilisation de SLA, constituant l'état prédictif d'utilisation du réseau, à partir des profils d'utilisation des SLAs,
- on peut déterminer le profil prédictif d'utilisation de SLA à partir des troisièmes données et des profils d'utilisation des SLAs,
- on peut déterminer les profils d'utilisation des SLAs par évolution de tendance,
- on peut déterminer une configuration optimale du réseau à partir des secondes données décrivant les équipements du réseau et d'un état prédictif d'utilisation, puis déterminer une configuration optimale, associée à cet état prédictif, puis déterminer si le réseau peut supporter, ou non, cette configuration optimale, et, dans la négative, déterminer les équipements du réseau susceptibles d'être perturbés par l'évolution du réseau qui correspond à l'état prédictif,
- on peut déterminer la proposition de planification à partir de la désignation des équipements perturbés et de données de planification stockées dans une base de données,
- on peut délivrer une proposition de planification qui minimise les coûts d'évolution du réseau,
- avant de délivrer la proposition de planification, on peut déterminer une nouvelle configuration optimale qui lui correspond, et à réception d'une nouvelle configuration optimale, associée à cette proposition de planification, on peut déterminer si le nouveau réseau, défini par la proposition de planification, peut supporter, ou non, cette nouvelle configuration optimale, et, dans l'affirmative on peut délivrer la proposition de planification, tandis que dans la négative on détermine les équipements du réseau susceptibles d'être perturbés par cette proposition de planification et on détermine une nouvelle proposition de planification à partir des équipements perturbés.

L'invention peut être mise en oeuvre dans tout type de réseau de communications, privé ou public, et en particulier dans les réseaux Internet/IP, MPLS/GMPLS, ATM et Frame Relay.

D'autres caractéristiques et avantages de l'invention apparaîtront à l'examen de la description détaillée ci-après, et des dessins annexés, sur lesquels :
- la figure 1 illustre de façon schématique une partie d'un réseau de communications équipé d'un dispositif de traitement selon l'invention, implanté dans un serveur de gestion du réseau,
- la figure 2 illustre de façon schématique un exemple de réalisation d'un dispositif de traitement selon l'invention,
- la figure 3 est un diagramme illustrant un exemple de charge (L_{ERj}) de routeur périphérique du réseau en fonction du temps (T), et
- la figure 4 est un diagramme illustrant un exemple de charge (L_{R1-R2}) d'une liaison entre deux routeurs de coeur du réseau en fonction du temps (T).

Les dessins annexés pourront non seulement servir à compléter l'invention, mais aussi contribuer à sa définition, le cas échéant.

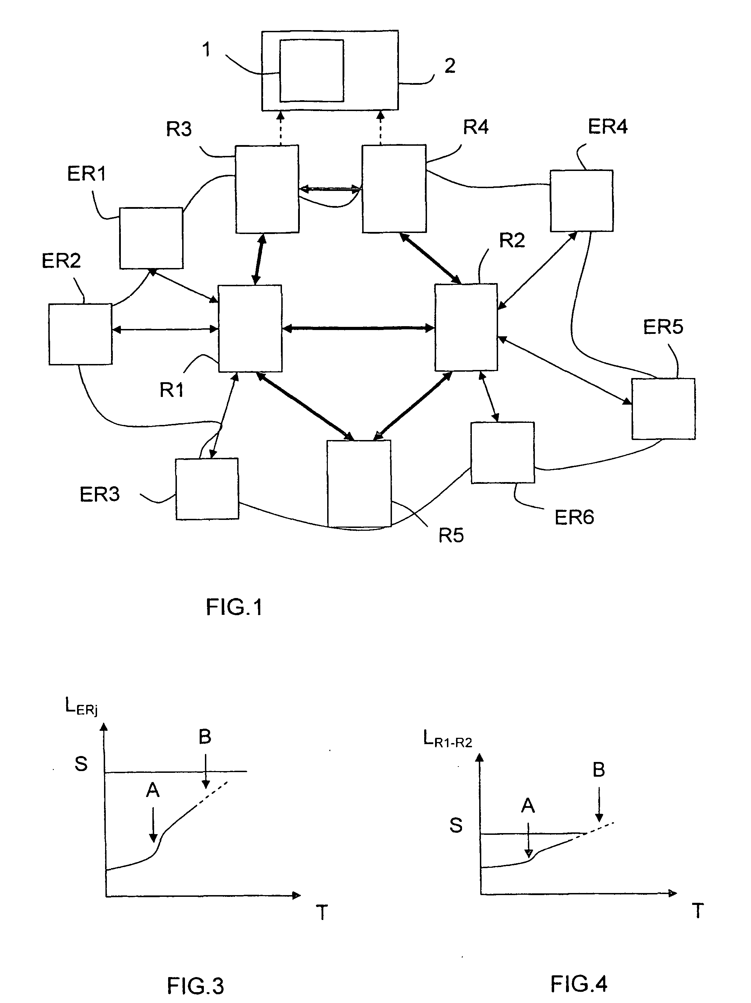

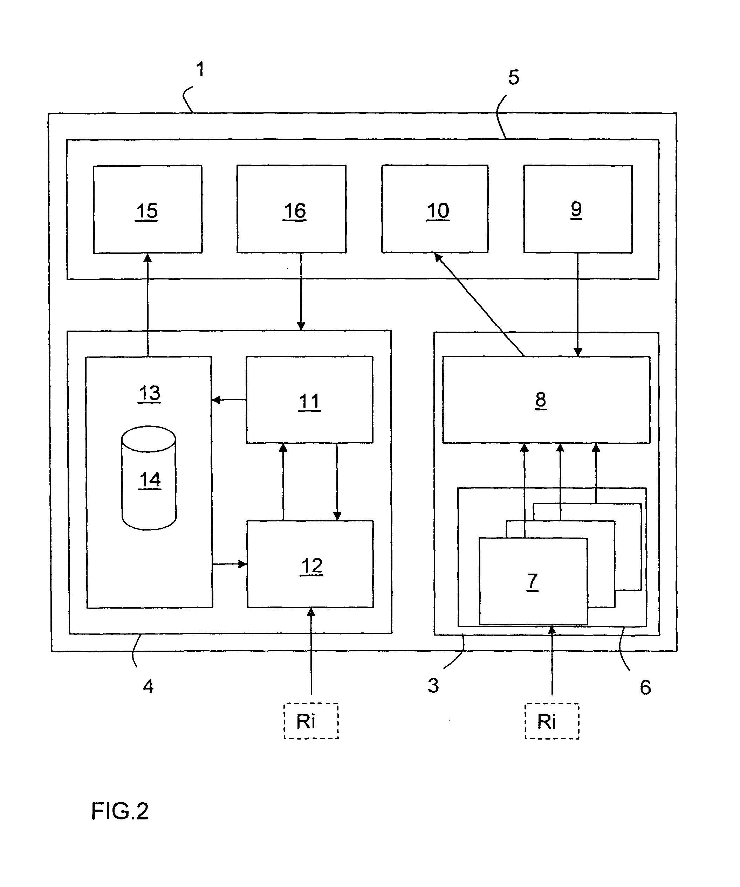

Le dispositif de traitement 1 selon l'invention est destiné à être installé au coeur d'un réseau de communications, du type de celui illustré sur la figure 1, par exemple dans un serveur de gestion du réseau 2, de type NMS (pour « Network Management System »), de manière à disposer des mesures des performances du réseau, et notamment des mesures de l'utilisation de ses ressources et de ses services.

A titre d'exemple non limitatif, on considère dans ce qui suit que le réseau est un domaine (ou AS pour « Autonomous System ») du réseau public Internet dans lequel les données sont échangées selon le protocole IP. Mais, il pourrait s'agir d'un réseau privé, de type Intranet, ou de plusieurs réseaux public(s) et/ou privé(s) raccordés les uns aux autres. Par ailleurs, on considère dans ce qui suit que les clients du réseau sont liés à l'opérateur par des accords de niveau de service (ou SLAs) qui incluent des parties techniques définies par des spécifications de niveau de service (ou SLSs pour « Service Level Spécifications »).

Le réseau illustré sur la figure 1 comporte, de façon non limitative, plusieurs routeurs de coeur (ou « core routers ») Ri (ici i = 1 à 5) raccordés les uns aux autres par des liaisons matérialisées par des traits épais, et des routeurs périphériques (ou « edge routers ») ERj (ici j = 1 à 6) chacun raccordés, d'une part, à l'un des routeurs de coeur Ri par une liaison matérialisée par un trait mince, et d'autre part, à des terminaux et/ou serveurs non représentés.

Comme indiqué précédemment, ce type de réseau comporte généralement un serveur de gestion 2 couplé à l'un au moins des routeurs de coeur Ri et alimenté en permanence en données d'informations représentatives de mesures de performances du réseau, de manière à délivrer au gestionnaire du réseau, via une interface graphique, des informations sur le fonctionnement de son réseau.

Ces informations de fonctionnement permettent donc au gestionnaire du réseau (ou à son opérateur) de gérer en temps réel le réseau. Mais, elles ne lui permettent pas directement de prévoir les modifications qui devront être apportées au réseau du fait de l'augmentation du trafic et/ou des services offerts, et plus généralement en fonction des futurs besoins des clients actuels et futurs.

L'invention propose donc un dispositif 1 de traitement des données de configuration du réseau destiné à élaborer, à l'attention du gestionnaire du réseau, des propositions de modification du réseau (ou propositions de planification) permettant d'anticiper les futurs besoins à l'instant le mieux approprié.

Un exemple de réalisation d'un tel dispositif de traitement 1 est illustré sur la figure 2. Il comporte tout d'abord un premier module de calcul 3 destiné à déterminer un état prédictif d'utilisation du réseau à partir de premières données représentatives, d'une part, de mesures de l'utilisation des ressources du réseau, et d'autre part, de mesures de l'utilisation des services au sein du réseau. Préférentiellement, ces mesures sont non seulement les dernières obtenues mais également celles obtenues dans le passé (dans un intervalle de temps choisi).

Le dispositif de traitement 1 comporte également un second module de calcul 4 chargé d'élaborer des propositions de planification d'évolution du réseau à partir de l'état prédictif d'utilisation, fourni par le premier module de calcul 3, et de secondes données représentatives des équipements du réseau. Préférentiellement, ces secondes données définissent la topologie du réseau et les caractéristiques des équipements qui le composent, ou en d'autres termes le détail des différentes ressources offertes par le réseau.

Par ailleurs, le dispositif de traitement 1 comprend préférentiellement une interface graphique utilisateur 5, de type GUI (pour « Graphical User Interface »), permettant, d'une part, d'afficher sur un écran, par exemple celui du serveur de gestion 2, les propositions de planification élaborées par le second module de calcul 3, ainsi qu'éventuellement l'état prédictif déterminé par le premier module de calcul 4, et d'autre part, au gestionnaire du réseau de contrôler le fonctionnement du dispositif de traitement 1.

Dans un mode de réalisation préféré, le premier module de calcul 3 comporte tout d'abord un module d'extraction 6 capable d'élaborer des profils d'utilisation des SLAs 7 à partir des premières données, fournies, notamment, par les routeurs de coeur Ri du réseau, et des SLAs passés entre l'opérateur du réseau et ses clients. Préférentiellement, le module d'extraction 6 élabore un profil d'utilisation pour chaque SLA. Par ailleurs, les premières données représentant l'historique des mesures des performances du réseau, le module d'extraction 6 élabore préférentiellement ses profils d'utilisation de SLA 7 par extrapolation, à l'aide d'une technique d'analyse d'évolution de tendance. Le module d'extraction 6 délivre également des alarmes prédictives ou non, lorsqu'un événement se produit ou lorsqu'il risque de se produire, à partir de l'analyse des mesures et des historiques de ces mesures.

Une fois que le module d'extraction 6 a élaboré ses profils d'utilisation des SLAs 7, il les communique à un module d'agrégation 8 du premier module de calcul 3. Celui-ci est chargé de déterminer l'état prédictif d'utilisation du réseau à partir, notamment, des profils d'utilisation des SLAs 7, ainsi que préférentiellement de troisièmes données représentatives d'informations de prévision de besoins d'utilisateurs.

Ces troisièmes données sont par exemple les futurs types de SLAs, susceptibles d'être passés entre l'opérateur du réseau et ses clients actuels et/ou futurs, et/ou l'évolution prévue des souscriptions de service. Elles sont obtenues par l'opérateur à l'aide d'études de marché et transmises au module d'agrégation 8 par exemple via un module de transmission 9 de l'interface graphique GUI 5.

L'état prédictif délivré par le module d'agrégation 8 est préférentiellement un profil prédictif d'utilisation de SLA obtenu par agrégation de l'ensemble des profils d'utilisation des SLAs, extrapolés à partir des premières données reçues du réseau, puis prise en compte des troisièmes données représentatives des futurs besoins. En fait, comme indiqué précédemment, les SLAs sont constitués d'un ou plusieurs SLSs qui définissent l'ensemble des paramètres techniques du service (ainsi que les seuils à garantir). Chacun de ces paramètres est généralement un nombre réel dont la valeur est estimée en fonction du temps, de sorte que l'historique d'un paramètre est généralement sous la forme d'une courbe. C'est notamment le cas de la bande passante illustrée sur les figures 3 et 4. L'agrégation se fait par conséquent à partir de l'addition des différentes courbes associées à chaque paramètre, comme par exemple la courbe des mesures (ou d'extrapolation) et une courbe obtenue à partir d'études de marché. Des coefficients de pondération peuvent être introduits dans ces additions, par exemple pour donner plus de poids à certaines prédictions considérées comme plus fiables, ou à certains services, ou encore à des prédictions plutôt qu'aux courbes issues des études de marché.

Le dispositif peut ainsi déterminer une proposition de (re-)planification particulièrement précise puisqu'elle prend en compte, d'une part, les informations (ou paramètres) représentatives de l'historique des performances du réseau, et d'autre part, les prévisions des besoins des clients en matière de ressources et/ou de services.

Préférentiellement, chaque état prédictif élaboré par le module d'agrégation 8, du premier module de calcul 3, est transmis à un premier module d'affichage 10 de l'interface graphique GUI 5, de sorte que le gestionnaire du réseau puisse l'analyser, et éventuellement la rejeter s'il ne veut pas qu'il soit pris en compte.

Egalement dans un mode de réalisation préféré, le second module de calcul 4 comporte tout d'abord un module de validation 11 chargé, notamment, de valider les états prédictifs (ici sous la forme de profils prédictifs d'utilisation de SLA) qui sont délivrés par le premier module de calcul 3. Préférentiellement, la validation d'un état prédictif s'effectue en collaboration avec un module d'ingénierie de trafic 12 du second module de calcul 4, tel que, pour les réseaux de type MPLS, le module 5620 TSOM de la Société ALCATEL.

Tout d'abord, le module de validation 11 transmet au module d'ingénierie de trafic 12 l'état prédictif reçu, de sorte qu'il détermine, à partir de cet état prédictif et de (secondes) données représentatives de la configuration actuelle (ou « layout ») du réseau existant, une configuration optimale dudit réseau. Il s'agit en fait de déterminer la meilleure utilisation possible des ressources du réseau existant compte tenu de l'état prédictif élaboré. Une fois que le module d'ingénierie de trafic 12 a déterminé la configuration optimale, il la communique au module de validation 11 qui vérifie si les ressources offertes par les équipements du réseau (routeurs, commutateurs, interfaces, liens physiques, liens logiques, tels que les « paths », connexions, etc) permettent de supporter ladite configuration optimale. La description de ces ressources du réseau (ou « info-modèle ») est préférentiellement partagée par les constituants du second module de calcul 4.

Si tel est le cas, cela veut dire que le réseau existant peut supporter les futurs besoins. Par conséquent, il n'est pas nécessaire d'élaborer une proposition de (re-)planification du réseau. Préférentiellement, le gestionnaire du réseau en est informé via l'interface graphique GUI 5.

En revanche, si le réseau existant ne peut supporter les futurs besoins, le module de validation 11 détermine quel(s) équipement(s) du réseau est (sont) susceptible(s) d'être perturbé(s) par l'évolution du réseau qui correspond à l'état prédictif. On entend ici par « être perturbé », le fait de ne pas suffire aux futurs besoins en matière de ressources et/ou de services. Par exemple, dans le cas d'un second module de calcul 4 tel que le module 5620 TSOM de la Société ALCATEL, on cherche à répartir la charge du trafic sur l'ensemble des ressources du réseau. Si la charge est supérieure à la capacité de transport du réseau, on surcharge certaines ressources, comme on le fait dans le cas des « sur-réservations ». Cette solution fonctionne assez bien lorsque tous les clients utilisateurs des ressources du réseau n'utilisent pas le réseau de façon simultanée. Le second module 4 fournit donc tout ou partie des informations de sur-réservation des ressources du réseau.

Puis, une fois qu'il a déterminé les équipements qui sont susceptibles d'être perturbés, le module de validation 11 fournit leurs désignations à un module de planification 13, du second module de calcul 4, chargé de faire des propositions d'évolution (ou modification) du réseau existant. En fait, le module de planification 13 détermine une nouvelle configuration du réseau, par exemple en proposant une mise à jour de certains routeurs et/ou certaines interfaces permettant de supporter de plus gros débits.

Préférentiellement, ce module de planification 13 est couplé à une base de données de planification 14, contenant des données, préférentiellement sous forme de règles définies par un planificateur. Ces règles peuvent prendre en compte les informations de sur-réservation délivrées par le second module de calcul 4.

Parmi les règles possibles on peut citer par exemple « Si une liaison est utilisée à plus de 90%, alors il faut augmenter, de la valeur appropriée, la capacité de cette liaison » ou « Si un routeur possède une interface qui est utilisée à plus de 80%, alors il faut le remplacer par un routeur de la classe supérieure ». On peut également citer la règle : « Si une interface d'un routeur est sur-réservée à plus de 20% de sa charge maximale, alors il faut proposer une mise à jour de 50% de cette interface ».

Préférentiellement, les données (règles) de planification sont élaborées de sorte que la proposition de planification minimise les frais de modification du réseau existant.

Le module de planification 13 élabore donc une proposition de planification (ou modification) du réseau à partir de la désignation des équipements perturbés et des données de planification contenues dans la base de données 14.

La proposition de planification (ou modification) décrit chaque équipement devant être modifié ou remplacé, les localisations précises de ces équipements, et l'instant le plus favorable pour procéder aux modifications.

Avant de fournir la proposition de planification (ou modification) au gestionnaire du réseau, on peut, à ce stade, effectuer une boucle de validation de la proposition. Pour ce faire, le module de planification 13 transmet sa proposition de planification au module d'ingénierie de trafic 12, de sorte qu'il détermine une nouvelle configuration optimale du réseau modifié objet de la proposition. Il s'agit en fait de déterminer la meilleure utilisation possible des ressources du réseau proposé. Une fois que le module d'ingénierie de trafic 12 a déterminé la nouvelle configuration optimale, il la communique au module de validation 11 qui vérifie si les ressources offertes par les équipements du réseau modifié permettent de supporter ladite nouvelle configuration optimale.

Si tel est le cas, cela veut dire que la proposition de planification est valable. Le module de validation 11 autorise alors le module de planification 13 à communiquer sa proposition de planification à un second module d'affichage 15 de l'interface graphique GUI 5, de sorte que le gestionnaire du réseau puisse l'analyser.

En revanche, si le réseau modifié ne peut supporter la nouvelle configuration optimale, le module de validation 11 détermine quel(s) équipement(s) du réseau est (sont) susceptible(s) d'être perturbé(s) par la configuration optimale déterminée par le module d'ingénierie de trafic 12. Il fournit alors au module de planification 13 les désignations des équipements du réseau susceptibles d'être perturbés de sorte qu'il détermine une nouvelle proposition de planification, qui peut éventuellement faire l'objet d'une nouvelle validation. En fait, on peut configurer le dispositif de traitement 1 de sorte qu'il effectue des boucles de validation jusqu'à ce que le module de validation 11 décide qu'une proposition de planification est valable, ou en d'autres termes qu'aucun équipement du réseau modifié ne risque d'être perturbé. On peut éventuellement prévoir une limitation du nombre maximal de boucles de validation.

Préférentiellement, l'interface graphique GUI 5 comporte un module de contrôle 15 permettant au gestionnaire du réseau de contrôler la procédure de planification et notamment la boucle de validation.

On va maintenant décrire un exemple de génération d'une proposition de modification du réseau illustré sur la figure 1, en référence aux figures 3 et 4.

Dans cet exemple, les différents routeurs périphériques ERj présentent tous un profil de charge L_{ERj} du type de celui illustré sur la figure 3. Plus précisément, ce profil de charge L_{ERj} comporte une première partie A, en trait continu, représentant l'évolution du trafic mesuré en fonction du temps, et une seconde partie B, en pointillés, représentant la prédiction d'évolution du trafic en fonction du temps.

Par ailleurs, la liaison entre les routeurs de coeur R1 et R2 présente un profil de charge L_{R1-R2} du type de celui illustré sur la figure 4. Plus précisément, ce profil de charge L_{R1-R2} comporte une première partie A, en trait continu, représentant l'évolution du trafic mesuré en fonction du temps, et une seconde partie B, en pointillés, représentant la prédiction d'évolution du trafic en fonction du temps.

Dans cet exemple, la prévision d'évolution de charge B des routeurs périphériques ERj est encore assez loin du seuil maximal S de charge, fixé par les règles de la base de données de planification 14. En revanche, la prévision d'évolution de charge B de la liaison entre les routeurs de coeur R1 et R2 indique que sa future charge va dépasser le seuil maximal S, fixé par les règles de la base de données de planification 14.

Le module d'ingénierie de trafic 12 détermine une configuration optimale correspondant aux prévisions effectuées, compte tenu du réseau existant. Puis, le module de validation 11 vérifie si le réseau existant peut supporter cette configuration. Dans cet exemple, comme indiqué ci-dessus, la surcharge ne peut pas être résolue par une redistribution du trafic entre R1 et R2 sur les autres liaisons, puisqu'elles atteindraient alors leurs limites. Par conséquent, le module de validation 11 en déduit qu'une surcharge risque de se produire au niveau des routeurs de coeur R1 et R2 et de leur liaison, dans l'intervalle de temps considéré. Il va donc adresser au module de planification 13 les désignations des routeurs de coeur R1 et R2 et de leur liaison, de sorte qu'il élabore une proposition de planification susceptible de pallier cette surcharge.

Par exemple, le module de planification 13 propose de remplacer la liaison entre R1 et R2 par une liaison présentant une capacité beaucoup plus importante (10 Gb (gigabit) au lieu de 2,5 Gb). Cette solution est par exemple choisie lorsque la base de données de planification 14 comporte une règle stipulant que l'on doit minimiser le nombre de liaisons dont la capacité doit être augmentée.

Les premier 3 et second 4 modules de calcul du dispositif de traitement 1 peuvent être respectivement réalisés sous la forme de circuits électroniques, de modules logiciels (ou informatiques), ou d'une combinaison de circuits et de logiciels.

L'invention offre également un procédé de traitement de données de configuration d'un réseau de communications.

Celui-ci peut être mis en oeuvre à l'aide du dispositif de traitement 1 présenté ci-avant. Les fonctions et sous-fonctions principales et optionnelles assurées par les étapes de ce procédé étant sensiblement identiques à celles assurées par les différents moyens constituant le dispositif de traitement 1, seules seront résumées ci-après les étapes mettant en oeuvre les fonctions principales du procédé selon l'invention.

Ce procédé consiste à déterminer, d'une part, un état prédictif d'utilisation du réseau à partir de premières données représentatives de l'utilisation des ressources et/ou des services au sein du réseau, et d'autre part, une proposition de planification d'évolution du réseau à partir de l'état prédictif d'utilisation et de secondes données représentatives des équipements de ce réseau.

Préférentiellement, on peut déterminer l'état prédictif d'utilisation du réseau à partir de troisièmes données, complémentaires des premières données et représentatives d'informations de prévision de besoins d'utilisateurs.

Grâce à l'invention, le gestionnaire du réseau peut disposer d'un diagnostique particulièrement précis et d'une proposition de modification (ou planification) de son réseau décrivant chaque équipement devant être modifié ou remplacé, les localisations précises de ces équipements, et l'instant le plus favorable pour procéder aux modifications, tout en minimisant les frais.

De plus, l'invention permet au gestionnaire du réseau de mieux définir les termes des accords de niveau de service (SLAs) qu'il doit passer avec ses futurs clients compte tenu du réseau existant, ainsi que les termes des SLAs qu'il devra passer avec ses futurs clients lorsque le réseau aura été modifié.

Ainsi, on a décrit une application de l'invention aux réseaux Internet/IP, mais elle peut être mise en oeuvre dans tout type de réseau de communications, privé ou public, et notamment dans les réseaux MPLS/GMPLS, ATM et Frame Relay.

Par ailleurs, l'invention peut également servir dans la phase de création de service et d'offre de service effectuée par l'opérateur d'un réseau. En effet, au lieu de faire varier les configurations du réseau existant, il est possible de faire varier les définitions des SLAs de manière à optimiser les définitions des SLSs susceptibles d'être supportées par le réseau existant.

## Revendications

1. Dispositif (1) de traitement de données de configuration d'un réseau de communications, comportant
• des premiers moyens de calcul (3) agencés pour déterminer à partir de premières données représentatives de l'utilisation des ressources et/ou des services au sein dudit réseau et d'accords de niveau de service, dits « SLAs », passés entre l'opérateur du réseau et des clients, des profils d'utilisation desdits SLAs (7), et pour déterminer un état prédictif d'utilisation du réseau à partir desdits profils d'utilisation desdits SLAs,
• et des seconds moyens de calcul (4) agencés pour déterminer une proposition de planification d'évolution du réseau à partir dudit état prédictif d'utilisation et de secondes données représentatives des équipements (Ri, ERj) dudit réseau.

2. Dispositif selon la revendication 1, **caractérisé en ce que** lesdits premiers moyens de calcul (3) sont agencés pour déterminer ledit état prédictif d'utilisation du réseau à partir de troisièmes données, complémentaires, représentatives d'informations de prévision de besoins d'utilisateurs.

3. Dispositif selon l'une des revendications précédentes, **caractérisé en ce que** lesdits premiers moyens de calcul (3) sont agencés pour déterminer un profil d'utilisation de SLA (7) pour chaque SLA.

4. Dispositif selon l'une des revendications précédentes, **caractérisé en ce que** lesdits premiers moyens de calcul (3) sont agencés pour déterminer un profil prédictif d'utilisation de SLA, constituant ledit état prédictif d'utilisation du réseau, à partir desdits profils d'utilisation des SLAs (7).

5. Dispositif selon la combinaison des revendications 1 et 4, **caractérisé en ce que** lesdits premiers moyens de calcul (3) sont agencés pour déterminer ledit profil prédictif d'utilisation de SLA à partir desdites troisièmes données et desdits profils d'utilisation des SLAs.

6. Dispositif selon l'une des revendications précédentes, **caractérisé en ce que** lesdites premières données sont choisies dans un groupe comprenant l'utilisation en cours des ressources et/ou des services du réseau, et une partie au moins de l'historique de l'utilisation des ressources et/ou des services dudit réseau.

7. Dispositif selon l'une des revendications 5 et 6, **caractérisé en ce que** lesdits premiers moyens de calcul (3) sont agencés pour déterminer lesdits profils d'utilisation des SLAs (7) par une analyse d'évolution de tendance.

8. Dispositif selon l'une des revendications précédentes, **caractérisé en ce que** lesdites troisièmes données sont choisies dans un groupe comprenant les futurs types de SLAs et l'évolution future des souscriptions de service.

9. Dispositif selon l'une des revendications précédentes, **caractérisé en ce que** lesdits seconds moyens de calcul (4) comportent des moyens d'ingénierie de trafic (12) agencés de manière à déterminer une configuration optimale du réseau à partir desdites secondes données décrivant les équipements (Ri, ERj) dudit réseau et d'un état prédictif d'utilisation, et des moyens de validation d'état prédictif (11) agencés i) pour alimenter lesdits moyens d'ingénierie de trafic (12) avec ledit état prédictif délivré par lesdits premiers moyens de calcul (3), et ii) à réception d'une configuration optimale, associée audit état prédictif, pour déterminer si ledit réseau peut supporter, ou non, cette configuration optimale, puis, dans la négative, déterminer les équipements du réseau susceptibles d'être perturbés par l'évolution du réseau correspondant audit état prédictif.

10. Dispositif selon la revendication 9, **caractérisé en ce que** lesdits seconds moyens de calcul (4) comprennent des moyens de détermination de planification (13) couplés à une base de données de planification (14) et agencés pour déterminer ladite proposition de planification à partir de la désignation des équipements perturbés et desdites données de planification de ladite base.

11. Dispositif selon la revendication 10, **caractérisé en ce que** lesdits moyens de détermination de planification (13) sont agencés pour délivrer une proposition de planification minimisant les coûts d'évolution du réseau.

12. Dispositif selon l'une des revendications 10 et 11, **caractérisé en ce que** certaines au moins desdites données de planification sont agencées sous forme de règles de planification.

13. Dispositif selon l'une des revendications 10 à 12, **caractérisé en ce que** lesdits moyens de détermination de planification (13) sont agencés, avant de délivrer ladite proposition de planification, pour alimenter lesdits moyens d'ingénierie de trafic (12) de sorte qu'ils déterminent une nouvelle configuration optimale correspondant à cette proposition de planification d'évolution du réseau, et **en ce qu'**à réception d'une nouvelle configuration optimale, associée à ladite proposition de planification, lesdits moyens de validation (11) sont agencés pour déterminer si ledit réseau, défini par ladite proposition de planification, peut supporter, ou non, cette nouvelle configuration optimale, puis, dans l'affirmative adresser auxdits moyens de détermination de planification (13) une autorisation de délivrer ladite proposition de planification, et dans la négative déterminer les équipements du réseau susceptibles d'être perturbés par ladite proposition de planification et adresser auxdits moyens de détermination de planification (13) la désignation desdits équipements perturbés de sorte qu'ils déterminent une nouvelle proposition de planification.

14. Dispositif selon l'une des revendications précédentes, **caractérisé en ce qu'**il comprend une interface graphique (5) agencée de manière à permettre la définition desdites troisièmes données par un opérateur, et l'affichage de chaque proposition de planification.

15. Dispositif selon l'une des revendications 13 à 14, en combinaison avec la revendication 13, **caractérisé en ce que** ladite interface graphique (5) est agencée de manière à permettre à un opérateur de contrôler la validation des propositions de planification.

16. Dispositif (2) de gestion d'un réseau de communications, **caractérisé en ce qu'**il comprend un dispositif de traitement (1) selon l'une des revendications précédentes.

17. Procédé de traitement de données de configuration d'un réseau de communications, consistant à déterminer
• à partir de premières données représentatives de l'utilisation des ressources et/ou des services au sein dudit réseau et d'accords de niveau de service, dits « SLAs », passés entre l'opérateur du réseau et des clients, des profils d'utilisation desdits SLAs (7),
• un état prédictif d'utilisation du réseau à partir desdits profils d'utilisation desdits SLAs, et
• une proposition de planification d'évolution du réseau à partir dudit état prédictif d'utilisation et de secondes données représentatives des équipements (Ri, ERj) dudit réseau.

18. Procédé selon la revendication 17, **caractérisé en ce que** l'on détermine ledit état prédictif d'utilisation du réseau à partir de troisièmes données, complémentaires, représentatives d'informations de prévision de besoins d'utilisateurs.

19. Utilisation des procédé, dispositif de traitement (1) et dispositif de gestion (2) selon l'une des revendications précédentes dans des réseaux choisis dans un groupe comprenant les réseaux Internet, IP, MPLS/GMPLS, ATM et Frame Relay.

## Patentansprüche

1. Vorrichtung (1) zur Verarbeitung von Konfigurationsdaten eines Kommunikationsnetzwerkes, umfassend:
• erste Berechnungshilfsmittel (3), dafür gestaltet, um ausgehend von ersten Daten, die für die Nutzung der Ressourcen und/oder der Dienste innerhalb des Netzwerks sowie für zwischen dem Netzwerkbetreiber und Kunden abgeschlossene Dienstgütevereinbarungen, sogenannte "SLAs", repräsentativ sind, Nutzungsprofile dieser SLAs (7) zu bestimmen und um einen vorhergesagten Auslastungszustand des Netzwerks ausgehend von den Nutzungsprofilen dieser SLAs zu bestimmen;
• und zweite Berechnungshilfsmittel (4), dafür gestaltet, um einen Planungsvorschlag für den Wandel des Netzwerks ausgehend von dem vorhergesagten Auslastungszustand und von zweiten für die Einrichtungen (Ri, ERj) des Netzwerks repräsentativen Daten zu bestimmen.

2. Vorrichtung nach Anspruch 1, **dadurch gekennzeichnet, dass** die ersten Berechnungshilfsmittel (3) dafür gestaltet sind, den vorhergesagten Auslastungszustand des Netzwerks ausgehend von dritten, ergänzenden Daten zu bestimmen, die für Informationen zur Vorhersage der Benutzerbedürfnisse repräsentativ sind.

3. Vorrichtung nach einem der vorhergehenden Ansprüche, **dadurch gekennzeichnet, dass** die ersten Berechnungshilfsmittel (3) dafür gestaltet sind, ein SLA-Nutzungsprofil (7) für jedes SLA zu bestimmen.

4. Vorrichtung nach einem der vorhergehenden Ansprüche, **dadurch gekennzeichnet, dass** die ersten Berechnungshilfsmittel (3) dafür gestaltet sind, ein vorhergesagtes SLA-Nutzungsprofil zu bestimmen, wobei der vorhergesagte Auslastungszustand des Netzwerks sich von diesen SLA-Nutzungsprofilen (7) gebildet wird.

5. Vorrichtung nach einer Kombination der Ansprüche 1 und 4, **dadurch gekennzeichnet, dass** die ersten Berechnungshilfsmittel (3) dafür gestaltet sind, das vorhergesagte SLA-Nutzungsprofil ausgehend von den dritten Daten und den SLA-Nutzungsprofilen zu bestimmen.

6. Vorrichtung nach einem der vorhergehenden Ansprüche, **dadurch gekennzeichnet, dass** die ersten Daten aus einer Gruppe gewählt werden, welche die laufende Nutzung der Ressourcen und/oder der Dienste des Netzwerks umfasst sowie zumindest einen Teil der Nutzungshistorie der Ressourcen und/oder der Dienste dieses Netzwerks.

7. Vorrichtung nach Anspruch 5 und 6, **dadurch gekennzeichnet, dass** die ersten Berechnungshilfsmittel (3) dafür gestaltet sind, die SLA-Nutzungsprofile (7) durch eine Tendenzentwicklungsanalyse zu bestimmen.

8. Vorrichtung nach einem der vorhergehenden Ansprüche, **dadurch gekennzeichnet, dass** die dritten Daten aus einer Gruppe gewählt werden, welche die künftigen SLA-Typen und die künftige Entwicklung der Dienstabonnementverträge umfasst.

9. Vorrichtung nach einem der vorhergehenden Ansprüche, **dadurch gekennzeichnet, dass** die zweiten Berechnungshilfsmittel (4) Verkehrstechnik-Vorrichtungen (12) umfassen, die dafür gestaltet sind, eine optimale Konfiguration des Netzwerks ausgehend von den zweiten Daten zur Beschreibung der Einrichtungen (Ri, ERj) des Netzwerks und von einem vorhergesagten Auslastungszustand zu bestimmen, sowie Vorrichtungen (11) zur Validierung des vorhergesagten Zustands, dafür gestaltet, i) den von den ersten Berechnungshilfsmitteln (3) gelieferten vorhergesagten Zustand in die Verkehrstechnik-Vorrichtungen (12) einzuspeisen; und ii) beim Empfang einer zu einem vorhergesagten Zustand gehörenden optimalen Konfiguration festzustellen, ob das Netzwerk diese optimale Konfiguration unterstützen kann oder nicht und anschließend im negativen Fall die Einrichtungen des Netzwerks zu bestimmen, die vom Wandel des Netzwerks gestört werden könnten, der dem vorhergesagten Zustand entspricht.

10. Vorrichtung nach Anspruch 9, **dadurch gekennzeichnet, dass** die zweiten Berechnungshilfsmittel (4) Vorrichtungen zur Planungsbestimmung (13) umfassen, die mit einer Planungsdatenbank (14) gekoppelt sind und die dafür gestaltet sind, dass der Planungsvorschlag ausgehend von der Benennung der gestörten Einrichtungen und den Planungsdaten der Datenbank bestimmt wird.

11. Vorrichtung nach Anspruch 10, **dadurch gekennzeichnet, dass** die Vorrichtungen zur Planungsbestimmung (13) dafür gestaltet sind, einen Planungsvorschlag zu liefern, der die Kosten für den Wandel des Netzwerks minimiert.

12. Vorrichtung nach einem der Ansprüche 10 dun 11, **dadurch gekennzeichnet, dass** zumindest einige der Planungsdaten in Form von Planungsregeln gestaltet sind.

13. Vorrichtung nach einem der Ansprüche 10 bis 12, **dadurch gekennzeichnet, dass** die Vorrichtungen zur Planungsbestimmung (13) dafür gestaltet sind, vor der Lieferung des Planungsvorschlags eine Einspeisung in die Verkehrtechnik-Vorrichtungen (12) durchzuführen, sodass diese eine neue optimale Konfiguration bestimmen, die diesem Planungsvorschlag für den Wandel des Netzwerks entspricht; und **dadurch**, dass beim Empfang einer neuen optimalen Konfiguration, die zu dem Planungsvorschlag gehört, die Validierungsvorrichtungen (11) dafür gestaltet sind, zu bestimmen, ob das durch den Planungsvorschlag definierte neue Netzwerk diese neue optimale Konfiguration unterstützen kann oder nicht, und um anschließend im positiven Fall an die Vorrichtungen zur Planungsbestimmung (13) eine Genehmigung zur Auslieferung des Planungsvorschlags zu richten und um im negativen Fall die Einrichtungen des Netzwerks zu bestimmen, die von diesem Planungsvorschlag gestört werden können und um an die Vorrichtungen zur Planungsbestimmung (13) die Benennung dieser gestörten Einrichtungen zu richten, damit diese einen neuen Planungsvorschlag bestimmen können.

14. Vorrichtung nach einem der vorhergehenden Ansprüche, **dadurch gekennzeichnet, dass** er eine grafische Benutzeroberfläche (5) umfasst, dafür gestaltet, die Definition der dritten Daten durch einen Betreiber und die Anzeige jedes Planungsvorschlags zu ermöglichen.

15. Vorrichtung nach einem der Ansprüche 13 bis 14 in Verbindung mit Anspruch 13, **dadurch gekennzeichnet, dass** die grafische Benutzeroberfläche (5) dafür gestaltet ist, einem Betreiber die Validierung der Planungsvorschläge zu ermöglichen.

16. Vorrichtung (2) zum Management eines Kommunikationsnetzwerkes, **dadurch gekennzeichnet, dass** sie eine Verarbeitungsvorrichtung (1) nach einem der vorhergehenden Ansprüche umfasst.

17. Verarbeitungsverfahren für Konfigurationsdaten eines Kommunikationsnetzwerkes, bestehend aus dem Bestimmen
• von Nutzungsprofilen von SLAs (7) ausgehend von ersten Daten, welche für die Nutzung der Ressourcen und/oder der Dienste innerhalb des Netzwerks sowie für zwischen dem Netzwerkbetreiber und Kunden abgeschlossene Dienstgütevereinbarungen, sogenannte "SLAs", repräsentativ sind;
• eines vorhergesagten Auslastungszustands des Netzwerks ausgehend von den SLA-Nutzungsprofilen; und
• eines Planungsvorschlags für den Wandel des Netzwerks ausgehend von dem vorhergesagten Auslastungszustand und von zweiten für die Einrichtungen (Ri, ERj) des Netzwerks repräsentativen Daten.

18. Vorrichtung nach Anspruch 17, **dadurch gekennzeichnet, dass** man den vorhergesagten Auslastungszustand des Netzwerks ausgehend von dritten, ergänzenden Daten bestimmt, die für Informationen zur Vorhersage der Benutzerbedürfnisse repräsentativ sind.

19. Nutzung von Verfahren, Verarbeitungsvorrichtung (1) und Managementvorrichtung (2) nach einem der vorhergehenden Ansprüche in Netzwerken, die aus einer Gruppe umfassend die Netzwerke Internet, IP, MPLS/GMPLS, ATM und Frame Relay, gewählt werden.

## Claims

1. A system (1) for processing configuration data of a communication network, including
• first calculation means (3) adapted to determine from first data representative of the usage of resources and/or services within said network and service level agreements (SLAs) between the operator of the network and customers, usage profiles of said SLAs (7), and to determine a network usage predictive state from said usage profiles of said SLAs,
• and second calculation means (4) adapted to determine a network evolution planning proposal from said usage predictive state and second data representative of plant (Ri, ERⱼ) of said network.

2. A system according to claim 1, **characterised in that** said first calculation means (3) are adapted to determine said network usage predictive state from complementary third data representative of user requirement prediction information.

3. A system according to any preceding claim, **characterised in that** said first calculation means (3) are adapted to determine an SLA usage profile (7) for each SLA.

4. A system according to any preceding claim, **characterised in that** said first calculation means (3) are adapted to determine an SLA usage predictive profile constituting said network usage predictive state from said SLA usage profiles (7).

5. A system according to claim 1 in combination with claim 4, **characterised in that** said first calculation means (3) are adapted to determine said SLA usage predictive profile from said third data and said SLA usage profiles.

6. A system according to any preceding claim, **characterised in that** said first data is chosen from a group comprising the current usage of resources and/or services of the network and at least a portion of the record of usage of the resources and/or services of said network.

7. A system according to claim 5 or claim 6, **characterised in that** said first calculation means (3) are adapted to determine said SLA usage profiles (7) by means of a trend evolution analysis.

8. A system according to any preceding claim, **characterised in that** said third data is chosen in a group comprising the future types of SLAs and the future evolution of service subscriptions.

9. A system according to any preceding claim, **characterised in that** said second calculation means (4) include traffic engineering means (12) adapted to determine an optimum configuration of the network from said second data describing the plant (Ri, ERⱼ) of said network and a usage predictive state and predictive state validation means (11) adapted i) to supply said traffic engineering means (12) with said predictive state delivered by said first calculation means (3) and ii) on receiving an optimum configuration associated with said predictive state to determine whether said network can support said optimum configuration or not and then, if it cannot, to determine the network plant liable to be disturbed by the evolution of the network corresponding to said predictive state.

10. A system according to claim 9, **characterised in that** said second calculation means (4) include planning determination means (13) connected to a planning database (14) and adapted to determine said planning proposal from the designation of the disturbed plant and said planning data from said database.

11. A system according to claim 10, **characterised in that** said planning determination means (13) are adapted to deliver a planning proposal minimising the costs of network evolution.

12. A system according to claim 10 or claim 11, **characterised in that** at least some of said planning data takes the form of planning rules.

13. A system according to any of claims 10 to 12, **characterised in that** said planning determination means (13) are adapted, before delivering said planning proposal, to supply said traffic engineering means (12) so that they determine a new optimum configuration corresponding to said network evolution planning proposal and **in that** said validation means (11) are adapted, on receiving a new optimum configuration associated with said planning proposal, to determine if said network, as defined by said planning proposal, can support said new optimum configuration or not and then, if it can, to send to said planning determination means (13) an authorization to deliver said planning proposal and, if it cannot, to determine the network plant liable to be disturbed by said planning proposal and to send to said planning determination means (13) the designation of said disturbed plant for them to determine a new planning proposal.

14. A system according to any preceding claim, **characterised in that** it includes a graphical user interface (5) adapted to enable the definition of said third data by an operator and the display of each planning proposal.

15. A system according to claim 13 or claim 14, in combination with claim 13, **characterised in that** said graphical user interface (5) is adapted to enable an operator to monitor the validation of planning proposals.

16. A system (2) for managing a communication network, **characterised in that** it includes a processing system (1) according to any one of the preceding claims.

17. A method of processing communication network configuration data, consisting in determining
• from first data representative of the usage of resources and/or services within said network and service level agreements (SLAs) between the operator of the network and customers, usage profiles of said SLAs (7),
• a network usage predictive state from said usage profiles of said SLAs, and
• a network evolution planning proposal from said usage predictive state and second data representative of plant (Ri, ERⱼ) of said network.

18. A method according to claim 17, **characterised in that** said network usage predictive state is determined from complementary third data representative of user requirement prediction information.

19. Use of a method, a processing system (1), and a management system (2) according to any one of the preceding claims in networks chosen from a group comprising Internet IP, MPLS/GMPLS, ATM and Frame Relay networks.
